# EUROPEAN PATENT SPECIFICATION

(11) **EP 3 410 607 B1**
(45) Date of publication and mention of the grant of the patent: **07.08.2024**
(21) Application number: 18172085.5
(22) Date of filing: 14.05.2018
(51) Int. Cl.: H04B 1/3805

(54) **PROTECTIVE CASE FOR ELECTRONIC DEVICE AND MOBILE DEVICE FOR WIFI ACCESS**
SCHUTZHÜLLE FÜR ELEKTRONISCHE VORRICHTUNG UND MOBILGERÄT FÜR WIFI ZUGANG
HOUSSE PROTECTICE POUR UN DISPOSITIF ÉLECTONIQUE ET PORTABLE POUR ACCÈS WIFI

(30) Priority: 31.05.2017 CN 201710399054
(43) Date of publication of application: 05.12.2018
(73) Proprietor: Beijing Xiaomi Mobile Software Co., Ltd., Beijing 100085 (CN)
(72) Inventor: XING, Zheng, Beijing, Beijing 100085 (CN); ZHANG, Lei, Beijing, Beijing 100085 (CN); LIU, Zhenhua, Beijing, Beijing 100085 (CN)
(74) Representative: dompatent von Kreisler Selting Werner - Partnerschaft von Patent- und Rechtsanwälten mbB

(56) References cited:
- CN-U- 204 906 458
- US-A1- 2013 017 788
- US-A1- 2014 065 948
- US-A1- 2014 085 815
- US-A1- 2015 270 734
- US-A1- 2016 315 652
- US-B1- 9 300 347

## Description

### TECHNICAL FIELD

The present disclosure relates to the field of electronic technology, and more particularly to a protective case for an electronic device and a mobile device for WIFI access.

### BACKGROUND ART

WIFI is a technology for wireless local area networking with devices based on the IEEE 802.11 standards. When using an electronic device that needs to connect to a network such as a mobile phone at an unusual place, since there is no free WIFI network, and mobile data traffic and mobile hotspot tariffs are high, a user will choose to carry a mobile device for WIFI access alone to provide WIFI network for an electronic device such as a mobile phone, etc.

In the related art, a mobile device for WIFI access usually includes a structure such as a WIFI module and a built-in power supply, etc., which leads to its large size and inconvenience of carrying.

US 2016/0315652 A1 discloses a removable protective case connectable to a mobile device.

US 2013/0017788 A1 discloses a protective case for an electronic device for adding additional wireless communication protocols to the electronic device.

US 2014/0065948 related to mobile device accessories that extend the functionality and capabilities of mobile devices.

CN204906458U and US2015/270734A1 show related prior art.

### SUMMARY

In order to overcome the problems in the related art, the present disclosure provides a protective case for an electronic device for WIFI access The present invention is defined by the features of the appended claims.

The technical solutions provided by embodiments of the present disclosure may include the following beneficial effects:

It can be seen from the above embodiments that the present disclosure provides a WIFI module in a protective case for an electronic device, so that the WIFI module provides a WIFI signal for an electronic device assembled in the protective case for the electronic device.

It is to be understood that both the forgoing general description and the following detailed description are exemplary and illustrative only, and are not restrictive of the present disclosure.

### BRIEF DESCRIPTION OF THE DRAWINGS

The drawings are incorporated in, and formed a part of, the specification to show embodiments in conformity with the disclosure, and are for the purpose of illustrating the principles of the disclosure along with the specification.
Fig. 1 is a diagram of an application scenario of a mobile device for WIFI access in the related art;
Fig. 2 s a diagram of an application scenario of another mobile device for WIFI access in the related art;
Fig. 3 is a schematic structural diagram of a mobile device for WIFI access in an exemplary embodiment of the present disclosure;
Fig. 4 is a schematic structural diagram of a mobile device for WIFI access in another exemplary embodiment of the present disclosure;
Fig. 5 is a schematic structural diagram of a mobile device for WIFI access in yet another exemplary embodiment of the present disclosure;
Fig. 6 is a schematic structural diagram of a mobile device for WIFI access in a further exemplary embodiment of the present disclosure;
Fig. 7 is a schematic structural diagram of a concave portion in an exemplary embodiment of the present disclosure;
Fig. 8 is a schematic structural diagram of a concave portion in another exemplary embodiment of the present disclosure;
Fig. 9 is a schematic structural diagram of a protective case for an electronic device in an exemplary embodiment of the present disclosure;
Fig. 10a is a user interface diagram of a mobile phone when a protective case for the mobile phone is used with the mobile phone cooperatively in an exemplary embodiment of the present disclosure;
Fig. 10b is a user interface diagram of a mobile phone when a protective case for the mobile phone is used with the mobile phone cooperatively in another exemplary embodiment of the present disclosure;
Fig. 10c is a user interface diagram of a mobile phone when a protective case for the mobile phone is used with the mobile phone cooperatively in yet another exemplary embodiment of the present disclosure;
Fig. 10d is a user interface diagram of a mobile phone when a protective case for the mobile phone is used with the mobile phone cooperatively in a further exemplary embodiment of the present disclosure.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the disclosure. Instead, they are merely examples of apparatuses and methods consistent with aspects related to the disclosure as recited in the appended claims.

The present disclosure is described by taking a mobile device for WIFI access applied to a mobile phone as an example, the structural improvements involved therein are also applicable to an electronic device connected to a network through WIFI, such as a tablet computer and a smart watch, etc.

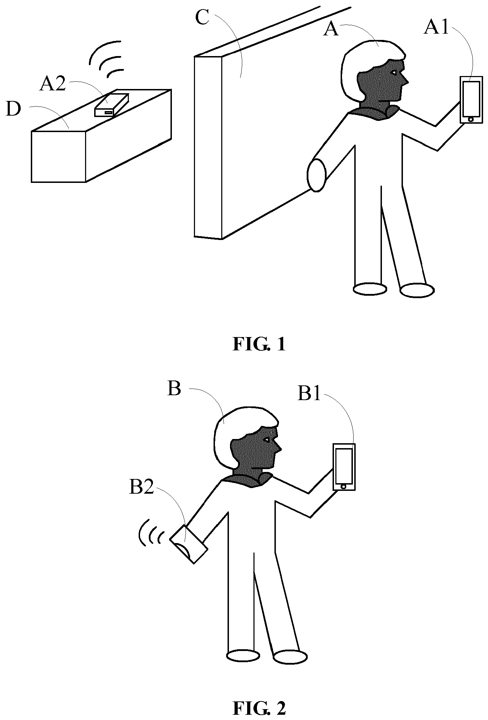

Since a mobile device for WIFI access A2 generally has a predetermined coverage area, the WIFI network can be used when the mobile phone A1 is within the predetermined area, and the farther the distance from the mobile device for WIFI access A2, the worse a WIFI signal received by the mobile phone A1 is. When the mobile phone A1 exceeds the above predetermined area, the WIFI network is not able to be used. In addition, the spread of the WIFI signal is also limited by an obstacle that needs to be crossed. When the WIFI signal strength is insufficient to penetrate the obstacle, the mobile phone A1 at the other end of the obstacle is not able to use the WIFI network. Fig. 1 is a diagram of an application scenario of a mobile device for WIFI access in the related art. As shown in Fig. 1, a user A places the mobile device for WIFI access A2 separately on a desktop D, and holds the mobile phone A1 in his hand. When the user A walks in the room, the distance between the user A and the desktop D is suddenly far and near, causing the signal received by the mobile phone A1 is unstable due to the distance and obstacles such as a wall C. Fig. 2 is a diagram of an application scenario of another mobile device for WIFI access in the related art. As shown in Fig. 2, in order to prevent the WIFI signal received by the mobile phone B1 from being unstable, a user B holds a mobile device for WIFI access B2 independent of a mobile phone B1 and the mobile phone B1 in the hands together, causing a problem regarding inconvenience of carrying.

In order to solve the above problems, the present disclosure improves the structure of the mobile device for WIFI access A2 or B2, which will be specifically described as follows with reference to embodiments.

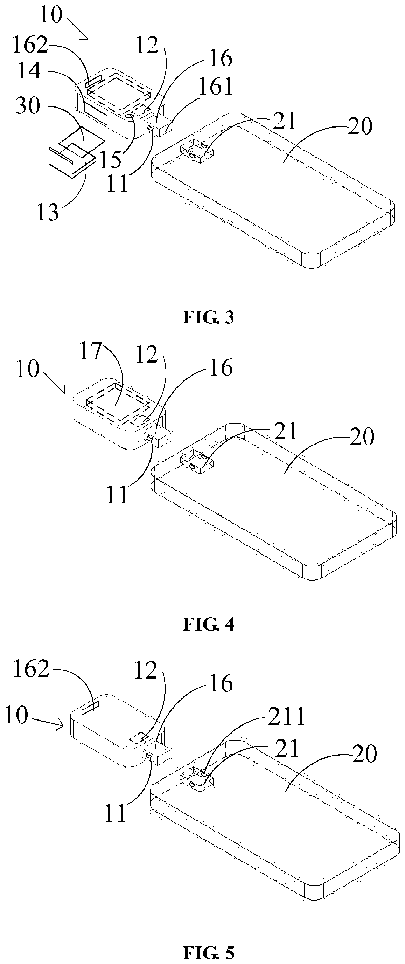

Fig. 3 is a schematic structural diagram of a mobile device for WIFI access in an exemplary embodiment of the present disclosure. The mobile device for WIFI access 10 as shown in Fig. 3 may include an assembling component 11 and a WIFI module 12. The WIFI module 12 may include one or more hardware circuitries such as transceiver with integrated RF power amplifier and at least one microcontroller in communication with the one or more transceiver. For example, the WIFI module may be a self-contained system on chip (SOC) with integrated TCP/IP protocol stack that can give any microcontroller access to the WIFI network. The assembling component 11 may engage with at least a part of a mobile phone 20 to enable the assembling and engaging of the mobile phone 20 with the mobile device for WIFI access 10. The WIFI module 12 may be associated with the mobile phone 20, and provide a WIFI signal to the mobile phone 20 so that the mobile phone 20 may access a wireless network provided by the WIFI module 12. The above-mentioned mobile device for WIFI access 10 can be assembled on the mobile phone 20, so it is easy to carry.

In one or more embodiments, the mobile device for WIFI access 10 may further include a card tray 13 for installing a network access card 30 and an accommodation slot 14 with a card holder. In the case that the card tray 13 is inserted into the accommodation slot 14 and engaged with the card holder, the network access card 30 is connected to the WIFI module 12. Alternatively, the mobile device for WIFI access 10 may also use a built-in network access card 30 or a network access module embedded in the WIFI module 12, which is not limited in the present disclosure. In addition, the mobile device for WIFI access 10 may further include an indicator light 15 for indicating a connection and usage state of the mobile phone 20 and the WIFI module 12.

In order to solve the power supply problem of the WIFI module 12, the mobile device for WIFI access 10 may further include a power jack 16. The power jack 16 may include a first end 161 and a second end 162. When the mobile phone 20 is assembled with the mobile device for WIFI access 10, the first end 161 of the power jack 16 is connected to a power interface 21 of the mobile phone 20 so as to power the WIFI module 12 through a battery of the mobile phone 20. In addition, the second end 162 of the power jack 16 may be used to connect to an external power supply, so as to charge the mobile phone 20 if necessary. Of course, the mobile device for WIFI access 10 may also use a built-in power supply 17 shown in Fig. 4 to power the WIFI module 12. Alternatively, the mobile device for WIFI access 10 may include both the power jack 16 and the built-in power supply 17, so that the WIFI module 12 can be powered by using the power jack when the power of the mobile phone 20 is sufficient, while the built-in power supply 17 may be used to power the WIFI module 12 when the power of the mobile phone 20 is insufficient or in other cases.

In one or more embodiment shown in Fig. 5, the mobile device for WIFI access 10 may include an assembling component 11, a WIFI module 12, and a power jack 16. The assembling component 11 may also be disposed on the power jack 16 of the mobile device for WIFI access 10 as shown in Fig. 5, and at the same time, a clamping component 211 is disposed on the power interface 21 of the mobile phone 20, and the assembling component 11 is engaged with the clamping component 211 to enable the mobile device for WIFI access 10 to be assembled to the mobile phone 20. The arrangement of the above structure simplifies the overall structure of the mobile device for WIFI access 10, and the assembling of the mobile phone 20 with the mobile device for WIFI access 10 is completed while the power jack 16 engages with the power interface 21 of the mobile phone 20, therefore the operation is simple.

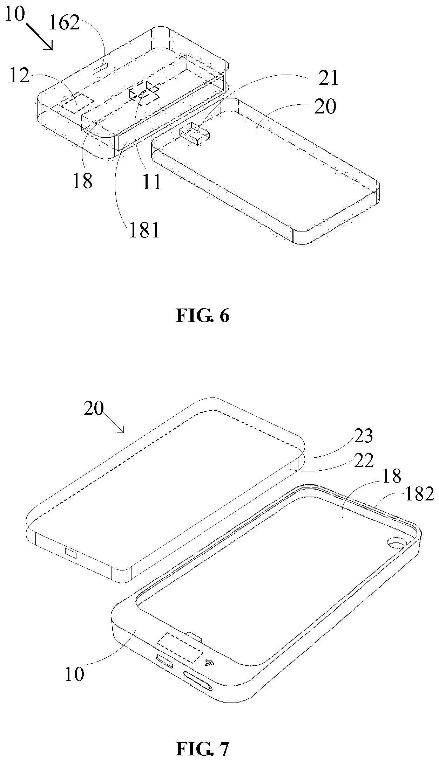

The mobile device for WIFI access 10 shown in Fig. 6 may include an assembling component 11 and a WIFI module 12. The assembling component 11 may include a concave portion 18 disposed on the mobile device for WIFI access 10. The concave portion 18 may be a partially enclosed housing with an opening 181. One end of the mobile phone 20 near the power interface 21 is inserted into the partially enclosed housing from the opening 181, and the partially enclosed housing matches with the edge of the mobile phone 20. A material with a relatively large friction may be selected for an inner wall of the partially enclosed housing to prevent the mobile device for WIFI access 10 from falling off the mobile phone 20. Since the area of the mobile phone 20 to be wrapped by the partially enclosed housing is small, the heat dissipation of the mobile phone 20 will not be affected. It should be noted that other assembly manners may also be selected to enable the accommodating cavity of the mobile device for WIFI access 10 to stably engage with the mobile phone 20, which is not limited in the present disclosure.

In one or more embodiments, the concave portion 18 may also be a groove with a bottom as shown in Fig. 7. Both a sidewall 22 and a bottom surface 23 of the mobile phone 20 may be accommodated in the groove with a bottom described above, thereby protecting both the sidewall 22 and the bottom surface 23 of the mobile phone 20 from being scratched and collided, which has a better protection effect. An inwardly bended rim 182 may be provided for the groove, and when the mobile phone 20 is positioned within the groove with a bottom, the rim 182 cooperates with the bottom of the groove with the bottom to fix the mobile phone 20 within the groove with a bottom, to prevent the mobile phone 20 from falling off.

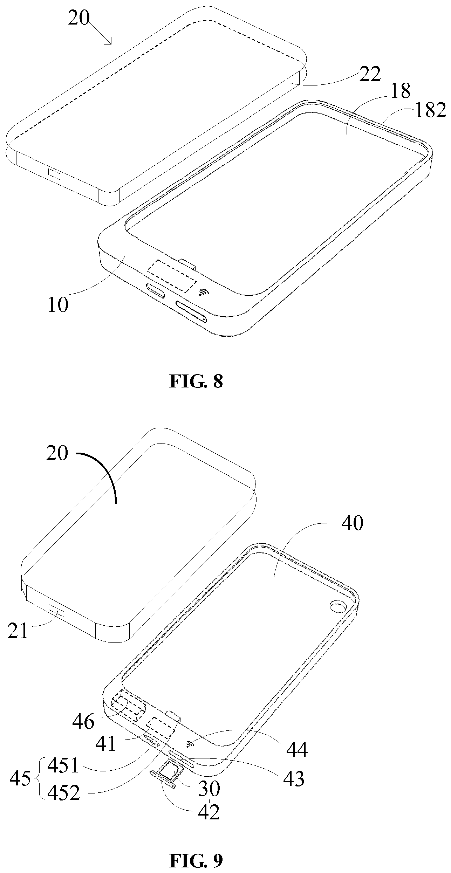

In order to take into account the heat dissipation of the mobile phone 20, the concave portion 18 may also be a groove without a bottom as shown in Fig. 8. The groove without a bottom is sleeved on the sidewall 22 of the mobile phone 20, so as to reduce the area of the mobile phone 20 to be wrapped and ensure a better assembling effect.

In order to improve the practicability of the mobile device for WIFI access, the present disclosure further provides a protective case for an electronic device. A protective case for a mobile phone is taken as an example for description. The structural improvements involved therein are also applicable to an electronic device connected to a network through WIFI, such as a tablet computer and a smart watch, etc.

The protective case 40 as shown in Fig. 9 may be assembled with the mobile phone 20 to prevent the mobile phone 20 from being damaged by scratches and impacts. The protective case 40 has a built-in WIFI module 41. The WIFI module 41 may provide the mobile phone 20 with a WIFI signal. Therefore, there is no need to configure a separate mobile device for WIFI access for the mobile phone 20, and the WIFI network can be used as long as the protective case 40 is sleeved on the mobile phone 20.

In one or more embodiments, the protective case 40 may further include a card tray 42 for installing a network access card 30 and an accommodation slot 43 with a card holder. In the case that the card tray 42 is inserted into the accommodation slot 43 and engaged with the card holder, the network access card 30 is connected to the WIFI module 41. Alternatively, the network access card 30 may also be provided in the protective case 40 or a network access module may also be embedded inside the WIFI module 41, which is not limited in the present disclosure. In addition, the protective case 40 may further include an indicator light 44 for indicating a connection and usage state of the mobile phone 20 and the WIFI module 41.

In order to solve the power supply problem of the WIFI module 41, the protective case 40 may further include a power jack 45. When the mobile phone 20 is assembled with the protective case 40, a first end 451 of the power jack 45 is connected to a power interface 21 of the mobile phone 20 so as to power the WIFI module 41. In addition, a second end 452 of the power jack 45 may be used to connect to an external power supply, so as to charge the mobile phone 20. Of course, the protective case 40 may also use a built-in power supply 46 connected to the WIFI module 41 to power the WIFI module 41. Alternatively, the protective case 40 may include both the power jack 45 and the built-in power supply 46, so that the WIFI module 41 can be powered by using the power jack 45 when the power of the mobile phone 20 is sufficient, while the built-in power supply 46 may be used to power the WIFI module 41 when the power of the mobile phone 20 is insufficient or in other cases.

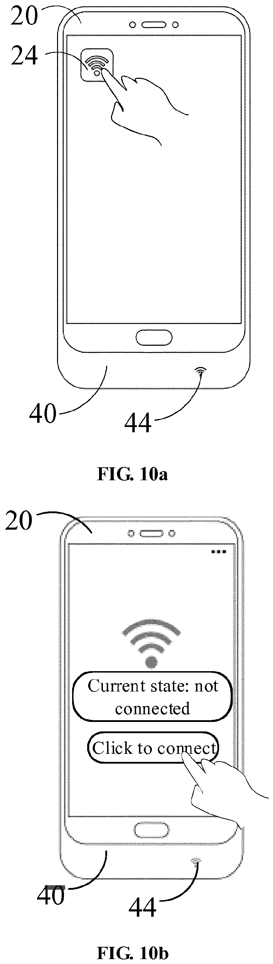

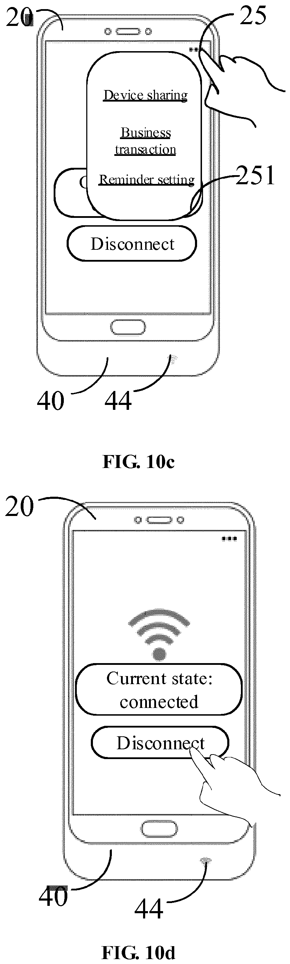

During using the mobile device for WIFI access and the protective case for a mobile phone 40 cooperatively with the mobile phone 20, the related functions of the WIFI module 41 and a power switch can also be controlled through an APP of the mobile phone. Specifically, a WIFI APP icon 24 on the screen of the mobile phone as shown in Fig. 10a is clicked to enter a main control interface of the WIFI module 41 as shown in Fig. 10b. The current state is "not connected", and the indicator light 44 may be displayed in red. After clicking a connection button as shown in Fig. 10b, when the indicator light 44 turns from red to green, the connection is successful, and at this moment, the mobile WIFI network service can be used. A function button 25 may be set on the main control interface of the WIFI module 41, and the function button 25 may be clicked to obtain an extended function menu 251 as shown in Fig. 10c. Specifically, when a friend wants to share the WIFI network with a holder who holds the protective case 40, a device sharing button may be clicked. The system will automatically generate a random password, and the friend can enter the random password to connect to access the network. The random password is time-sensitive, and a user can set an effective time by himself or herself, beyond which the password will be invalid. In addition, under this function, the number of devices being connected may be displayed, therefore whether an unknown device is squating the network can effectively be viewed. The user may also click on a business button to perform operations related to a business such as real-time package changes and renewal recharge etc. on the WIFI APP. The user may also set some reminder messages through a reminder setting button, such as a reminder regarding arrears, a reminder regarding squating network, and a reminder regarding a low speed and so on. As shown in Fig. 10d, in a connected state, the indicator light 44 is always-on and is in green. If you want to quit, you may need to click a disconnection button, and after the indicator light 44 turns from green to red, the mobile phone 20 is disconnected from the WIFI network. When the user exits the APP, the indicator 44 is turned off completely and the power of the mobile phone 20 will not be consumed any more.

A person skilled in the art, when considering the descriptions and practicing the present disclosure disclosed here, will easily conceive other implementations of the present disclosure. The present application is intended to cover any variation, use or adaptation of the disclosure, which follow general principle of the disclosure and include general knowledge or customary technical means in the art that are not disclosed herein. The descriptions and embodiments are only regarded to be exemplary, and real scope of the disclosure are indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A protective case (40) for an electronic device, wherein the protective case (40) for the electronic device is configured to assemble with the electronic device to protect the electronic device; and a built-in WIFI module (41) in the protective case (40) for the electronic device to provide a WIFI signal to the electronic device so as to enable the electronic device to connect with a wireless network through the built-in WIFI module (41),
wherein the protective case (40) for the electronic device further comprises a power jack (45) comprising a first end (451) and a second end (452), wherein when the electronic device is assembled with the protective case (40) for the electronic device, the first end (451) of the power jack (45) is connected to a power interface of the electronic device to supply power to the WIFI module (41) by a battery in the electronic device, and the second end (452) of the power jack (45) is connected to an external power supply to charge the electronic device,
wherein the protective case further comprises a card tray (42) for installing a network access card and an accommodation slot (43) with a card holder, wherein the card tray (42) is insertable in the accommodation slot (43) and engages with the card holder to enable the network access card to connect to the WIFI module (41).

2. The protective case (40) for the electronic device of claim 1, further comprising a built-in power supply (46) for supplying power to the WIFI module (41).

3. The protective case (40) for the electronic device of claim 1, further comprising:
an assembling component (11) configured to engage with at least a part of the electronic device to enable the assembling of the electronic device with the protective case (40) for the electronic device,
wherein the WIFI module (12) is configured to transmit the WIFI signal.

4. The protective case (40) for the electronic device of claim 3, wherein the assembling component (11) is disposed on the power jack (45), a clamping component (211) is disposed on the power interface of the electronic device, and the assembling component (11) is engaged with the clamping component (211) to enable the assembling of the protective case (40) for the electronic device with the electronic device.

5. The protective case (40) for the electronic device of claim 3, wherein the assembling component (11) comprises a concave portion (18) provided on the protective case (40) for the electronic device, at least a part of the electronic device is engaged in the concave portion (18), to enable the assembling of the protective case (40) for the electronic device with the electronic device.

6. The protective case (40) for the electronic device of claim 1, further comprising:
a housing configured to accommodate and protect the electronic device,
wherein the built-in WIFI module (41) is in the housing.

## Patentansprüche

1. Schutzhülle (40) für eine elektronische Vorrichtung, wobei die Schutzhülle (40) für die elektronische Vorrichtung dazu ausgebildet ist, zum Schutz der elektronischen Vorrichtung mit der elektronischen Vorrichtung zusammengefügt zu werden; und ein eingebautes WiFi-Modul (41) in der Schutzhülle (40) für die elektronische Vorrichtung, um der elektronischen Vorrichtung ein WiFi-Signal zu liefern, um der elektronischen Vorrichtung zu ermöglichen, sich durch das eingebaute WiFi-Modul (41) mit einem Drahtlosnetzwerk zu verbinden;
wobei die Schutzhülle (40) für die elektronische Vorrichtung ferner einen Stromanschluss (45) mit einem ersten Ende (451) und einem zweiten Ende (452) aufweist, wobei, wenn die elektronische Vorrichtung mit der Schutzhülle (40) für die elektronische Vorrichtung zusammengefügt ist, das erste Ende (451) des Stromanschlusses (45) mit einer Stromschnittstelle der elektronischen Vorrichtung verbunden ist, um dem WiFi-Modul (41) durch eine Batterie in der elektronischen Vorrichtung Strom zu liefern, und das zweite Ende (452) des Stromanschlusses (452) mit einer externen Stromquelle verbunden ist, um die elektronische Vorrichtung zu laden,
wobei die Schutzhülle ferner ein Karten-Fach (42) zum Einsetzen einer Netzwerkzugangskarte und einen Aufnahmeslot (43) mit einem Kartenhalter aufweist, wobei das Karten-Fach (42) in den Aufnahmeslot (43) einführbar ist und mit dem Kartenhalter zusammengreift, um der Netzwerkzugangskarte zu ermöglichen, sich mit dem WiFi-Modul (41) zu verbinden.

2. Schutzhülle (40) für eine elektronische Vorrichtung nach Anspruch 1, ferner mit einer eingebauten Stromquelle (46) zum Liefern von Strom an das WiFi-Modul (41).

3. Schutzhülle (40) für eine elektronische Vorrichtung nach Anspruch 1, ferner mit:
einem Montagebauteil (11), das dazu ausgebildet ist, mit zumindest einem Teil der elektronischen Vorrichtung zusammenzugreifen, um das Zusammenfügen der elektronischen Vorrichtung mit der Schutzhülle (40) für eine elektronische Vorrichtung zu ermöglichen,
wobei das WiFi-Modul (12) dazu ausgebildet ist, das WiFi-Signal zu senden.

4. Schutzhülle (40) für eine elektronische Vorrichtung nach Anspruch 3, bei welcher das Montagebauteil (11) an dem Stromanschluss (45) angeordnet ist, ein Klemmbauteil (211) an der Stromschnittstelle der elektronischen Vorrichtung angeordnet ist, und das Montagebauteil (11) mit dem Klemmbauteil (211) zusammengreift, um das Zusammenfügen der Schutzhülle (40) für die elektronische Vorrichtung mit der elektronischen Vorrichtung zu ermöglichen.

5. Schutzhülle (40) für eine elektronische Vorrichtung nach Anspruch 3, bei welcher das Montagebauteil (11) einen konkaven Bereich (18) aufweist, der in der Schutzhülle (40) für die elektronische Vorrichtung vorgesehen ist, wobei zumindest ein Teil der elektronischen Vorrichtung in den konkaven Bereich (18) eingreift, um das Zusammenfügen der Schutzhülle (40) für die elektronische Vorrichtung mit der elektronischen Vorrichtung zu ermöglichen.

6. Schutzhülle (40) für eine elektronische Vorrichtung nach Anspruch 1, ferner mit:
einem Gehäuse, das zum Aufnehmen und Schützen der elektronischen Vorrichtung ausgebildet ist;
wobei sich das eingebaute WiFi-Modul (41) in dem Gehäuse befindet.

## Revendications

1. Boîtier de protection (40) pour un dispositif électronique, dans lequel le boîtier de protection (40) pour le dispositif électronique est conçu pour être assemblé avec le dispositif électronique afin de protéger le dispositif électronique ; et un module Wi-Fi intégré (41) dans le boîtier de protection (40) pour le dispositif électronique pour fournir un signal Wi-Fi au dispositif électronique de manière à permettre au dispositif électronique de se connecter à un réseau sans fil par l'intermédiaire du module Wi-Fi intégré (41),
dans lequel le boîtier de protection (40) pour le dispositif électronique comprend en outre une prise d'alimentation (45) comprenant une première extrémité (451) et une seconde extrémité (452), dans lequel lorsque le dispositif électronique est assemblé avec le boîtier de protection (40) pour le dispositif électronique, la première extrémité (451) de la prise d'alimentation (45) est connectée à une interface d'alimentation du dispositif électronique pour alimenter le module WIFI (41) par une batterie dans le dispositif électronique, et la seconde extrémité (452) de la prise d'alimentation (45) est connectée à une alimentation externe pour charger le dispositif électronique,
dans lequel le boîtier de protection comprend en outre un tiroir de carte (42) pour installer une carte d'accès au réseau et une fente de réception (43) avec un support de carte, dans lequel le tiroir de carte (42) peut être inséré dans la fente de réception (43) et vient en prise avec le support de carte pour permettre à la carte d'accès au réseau de se connecter au module WIFI (41).

2. Boîtier de protection (40) pour le dispositif électronique selon la revendication 1, comprenant en outre une alimentation intégrée (46) pour fournir de l'énergie au module WIFI (41).

3. Boîtier de protection (40) pour le dispositif électronique selon la revendication 1, comprenant en outre :
un composant d'assemblage (11) conçu pour venir en prise avec au moins une partie du dispositif électronique pour permettre l'assemblage du dispositif électronique avec le boîtier de protection (40) pour le dispositif électronique,
dans lequel le module WIFI (12) est configuré pour transmettre le signal WIFI.

4. Boîtier de protection (40) pour le dispositif électronique selon la revendication 3, dans lequel le composant d'assemblage (11) est disposé sur la prise d'alimentation (45), un composant de serrage (211) est disposé sur l'interface d'alimentation du dispositif électronique, et le composant d'assemblage (11) est en prise avec le composant de serrage (211) pour permettre l'assemblage du boîtier de protection (40) pour le dispositif électronique avec le dispositif électronique.

5. Boîtier de protection (40) pour le dispositif électronique selon la revendication 3, dans lequel le composant d'assemblage (11) comprend une partie concave (18) pourvue sur le boîtier de protection (40) pour le dispositif électronique, au moins une partie du dispositif électronique est en prise dans la partie concave (18), pour permettre l'assemblage du boîtier de protection (40) pour le dispositif électronique avec le dispositif électronique.

6. Boîtier de protection (40) pour le dispositif électronique selon la revendication 1, comprenant en outre :
un logement conçu pour recevoir et protéger le dispositif électronique,
dans lequel le module WIFI intégré (41) est situé dans le logement.
